# FASCICULE DE BREVET EUROPEEN

(11) **EP 3 038 430 B1**
(45) Date de publication et mention de la délivrance du brevet: **11.11.2020**
(21) Numéro de dépôt: 15201678.8
(22) Date de dépôt: 21.12.2015
(51) Int. Cl.: H04W 88/16, H04B 7/185

(54) **SYSTÈME ET PROCÉDÉ DE TRANSMISSION DE DONNÉES UTILISANT CONJOINTEMENT UNE LIAISON TERRESTRE ET UNE LIAISON SATELLITAIRE**
DATENÜBERTRAGUNGSSYSTEM UND -VERFAHREN, DIE GLEICHZEITIG EINE LAND- UND EINE SATELLITENVERBINDUNG NUTZEN
SYSTEM AND METHOD FOR DATA TRANSMISSION USING A TERRESTRIAL LINK AND A SATELLITE LINK

(30) Priorité: 23.12.2014 FR 1402968
(43) Date de publication de la demande: 29.06.2016
(73) Titulaire: THALES, 92400 Courbevoie (FR)
(72) Inventeur: RATINEY, Marc, 31100 TOULOUSE (FR); VAN WAMBEKE, Nicolas, 31100 TOULOUSE (FR); GADAT, Benjamin, 31100 TOULOUSE (FR)
(74) Mandataire: Marks & Clerk France

(56) Documents cités:
- EP-A1- 1 335 530
- US-A1- 2010 296 497
- US-A1- 2014 105 129
- David Fernández ET AL: "Satellite Communications Data Link Solution for Long Term Air Traffic Management", Fourth SESAR Innovation Days, 1 novembre 2014 (2014-11-01), page 27, XP055219466, Extrait de l'Internet: URL:http://www.sesarinnovationdays.eu/site s/default/files/media/SIDs/SID 2014-33.pdf [extrait le 2015-10-08]

## Description

L'invention se situe dans le domaine des télécommunications, et plus particulièrement dans le domaine des systèmes de télécommunications dédiés au contrôle-commande de drones.

Elle vise à proposer un système, et le procédé associé, permettant l'utilisation conjointe et coordonnée d'une liaison satellitaire et d'une liaison sans fil terrestre dans un réseau de télécommunications, pour la transmission bidirectionnelle de données.

L'invention décrit l'architecture d'une station hybride temps réel distribuée permettant la mise en œuvre d'un tel système.

L'insertion d'aéronefs sans aucune personne à bord, ou drones, dans l'espace aérien est actuellement limitée à des espaces appropriés, dits « ségrégués », de manière à limiter les risques d'incidents. Les espaces ségrégués sont des espaces réservés, souvent militaires, soumis à des règles spécifiques, et dans lesquels ne viennent pas s'insérer d'équipements civils, comme des aéronefs d'aviation civile ou commerciale.

L'ouverture de l'espace aérien non-ségrégué aux drones pose de nombreux problèmes technologiques, comme celui de la fiabilité des mécanismes d'anticollision, ou celui de la fiabilité des systèmes de télécommunication utilisés pour le contrôle-commande. Les systèmes de télécommunication utilisés devront donc répondre à des critères stricts en termes de performances (taux d'erreur paquets, latence du réseau, débit utile, disponibilité globale du système, continuité du service).

Aujourd'hui, les systèmes de communication depuis et à destination d'un drone reposent le plus souvent sur l'utilisation de liaisons satellitaires. En effet, ce type de liaison assure une couverture importante. Cependant, aux abords de certains emplacements stratégiques, comme par exemple les zones urbaines, ou les aéroports, le drone peut être en contact avec une ou des stations terrestres. Le drone peut alors s'appuyer sur les liaisons terrestres en plus de la liaison satellitaire.

Le but de l'invention consiste à améliorer la fiabilité des communications en proposant un système de télécommunications hybride s'appuyant simultanément sur une liaison terrestre et sur une liaison satellitaire.

Les standards DVB-SH (acronyme anglais pour Digital Video Broadcasting - Satellite Handheld désignant une norme de diffusion vidéo numérique par satellite à destination d'un récepteur portable, aussi connu sous la désignation ETSI EN 302 583) et DVB-NGH (acronyme anglais pour Digital Video Broadcasting - Next Génération Handheld, évolution du standard DVB-SH, aussi connu sous la désignation ETSI EN 302 755), proposent une liaison de données hybride satellitaire/terrestre. Dans ces standards, l'hybridation est envisagée au niveau de la couche physique (couche 1 du modèle OSI (acronyme anglais pour Open Systems Interconnections, ou interconnexion de systèmes ouverts)) uniquement.

Le principe consiste à utiliser, sur la liaison satellitaire et sur la liaison terrestre, une forme d'onde utilisant une modulation OFDM (acronyme anglais pour Orthogonal Frequency Divison Multiplexing, ou multiplexage par répartition orthogonale en fréquence) associée à l'utilisation de turbo codes. L'émission se fait sur le lien terrestre et le lien satellitaire de manière à ce que les deux signaux soient reçus simultanément par le terminal, et recombinés par le biais d'un algorithme de MRC (acronyme anglais pour Maximal-Ratio Combining, ou combinaison à rapport maximal), afin d'améliorer le bilan de liaison et donc la fiabilité du lien.

Les deux liens radio doivent donc être synchronisés, l'utilisation d'une modulation OFDM permettant de supporter un décalage temporel limité entre les deux liens.

Un premier inconvénient relatif à ces standards provient de ce que les modulations OFDM ont des propriétés d'occupation spectrale et de consommation d'énergie qui ne sont pas adaptées aux communications satellitaires.

Un deuxième inconvénient est que le décalage temporel supporté par la modulation OFDM ne permet pas de supporter des variations trop importantes de mobilité. Les standards sont donc adaptés à une utilisation vers un terminal fixe ou à faible mobilité, mais pas à une mise en œuvre dans un contexte de forte mobilité tel que les communications aéronautiques.

Enfin, la compatibilité avec des systèmes d'accès de type TDMA (acronyme anglais pour Time Division Multiple Access, ou accès multiple à répartition dans le temps) ou WCDMA (acronyme anglais pour Wideband Code Division Multiple Access, ou multiplexage par code à large bande), qui nécessitent une forte synchronisation entre les signaux, est problématique.

Le programme Européen SESAR (acronyme anglais pour Single European Sky Air traffic management Research, ou programme de recherche sur la gestion du trafic aérien dans le Ciel unique européen) introduit la notion de « concept multi-liens », dans lequel le lien utilisé est sélectionné entre le lien terrestre et le lien satellitaire en fonction de paramètres comme la qualité de chacun des liens. Ce concept est décrit dans David Fernandez et al. : « Satellite Communications Data Link Solution for Long Term Air Traffic Management », Fourth SESAR Innovation Days, 1 novembre 2014. Cependant, les liens sont considérés comme indépendants, le routage ou la duplication des flux étant réalisés dans le réseau cœur. Il n'y a donc pas d'hybridation du système en temps que tel, ce qui entraine la présence d'un temps d'établissement de la liaison lors du basculement d'un lien vers un autre, peut engendrer des variations importantes de latences. De plus, certaines données en cours de transmission peuvent être perdues lors de ce basculement. Ce mécanisme est également présenté dans la demande de brevet Européen EP 1 335 530 A1, et dans la demande de brevet Américain US 2014/0105129 A1.

L'invention , décrite dans les revendications, propose donc un système adapté aux communications vers et depuis des drones, utilisant conjointement un lien satellitaire et un lien terrestre. Dans ce système, l'hybridation entre les deux liens est faite au niveau de la couche réseau (couche 3 du modèle OSI) et de la couche liaison de données (couche 2 du modèle OSI), afin d'améliorer la fiabilité de la liaison de données et de garantir la continuité des communications.

L'invention peut également s'appliquer à tout type de système disposant simultanément de deux liaisons de communication distinctes.

Pour ceci, la présente invention décrit une passerelle destinée à la transmission bidirectionnelle de données dans un réseau de télécommunications comportant au moins deux réseaux d'accès distincts vers un terminal mobile. La passerelle est caractérisée en ce qu'elle est configurée pour constituer un point d'accès à chacun desdits réseaux d'accès, et pour réaliser au moins :
- l'ensemble des fonctions de la couche réseau de ladite transmission de données, et
- l'ensemble des fonctions de la couche liaison de données de ladite transmission de données.

Les fonctions de la couche réseau et les fonctions de la couche liaison de données de la transmission de données sont adaptées selon le ou les réseaux d'accès sélectionnés.

Selon un mode de réalisation de la passerelle, les fonctions de contrôle de l'ensemble des réseaux d'accès comprennent :
- l'attribution de ressources radio sur chacun desdits réseaux d'accès,
- le contrôle des liens radio de chacun desdits réseaux d'accès,
- le contrôle de la signalisation de chacun desdits réseaux d'accès,
- le contrôle de la mobilité dudit terminal mobile à l'intérieur du réseau de télécommunications, et
- le contrôle de la redondance des réseaux d'accès à utiliser pour la transmission de données.

Selon un autre mode de réalisation de la passerelle, les fonctions de la couche liaison de données comprennent :
- des fonctions d'encapsulation desdites données,
- des fonctions de contrôle des erreurs de transmission sur chacun desdits réseaux d'accès, et
- des fonctions de planification desdites transmissions de données.

La présente invention consiste également en un système de transmission bidirectionnelle de données dans un réseau de télécommunications comportant au moins deux réseaux d'accès distincts vers un terminal mobile. Le système est caractérisé par ce qu'il comporte au moins une passerelle telle que définie précédemment, dite passerelle d'hybridation, et en ce que chacun des réseaux d'accès comprend au moins une passerelle d'accès configurée pour réaliser au moins des fonctions de la couche physique de ladite transmission de données.

Avantageusement, les passerelles d'accès du système de transmission de données sont configurées pour réaliser en outre des fonctions de planification des transmissions de données.

Dans un mode de réalisation du système de transmission de données, au moins l'un des réseaux d'accès est un réseau satellitaire.

Dans un autre mode de réalisation du système de transmission de données, au moins l'un des réseaux d'accès est un réseau terrestre.

Dans un autre mode de réalisation du système de transmission de données, le terminal mobile est un drone.

Dans un autre mode de réalisation du système de transmission de données, au moins deux desdits réseaux d'accès utilisent des standards de communication différents.

Dans un autre mode de réalisation du système de transmission de données, les passerelles d'accès sont configurées pour fournir à la passerelle d'hybridation des informations concernant la qualité des réseaux d'accès auxquels elles appartiennent.

Enfin, l'invention consiste en un procédé de transmission de données vers un terminal mobile dans un réseau de télécommunications comportant au moins deux réseaux d'accès distincts vers un terminal mobile, mettant en œuvre une passerelle d'hybridation et deux réseaux d'accès distincts comprenant chacun au moins une passerelle d'accès. Le procédé est caractérisé en ce qu'il comprend au moins des étapes de :
- contrôle, par la passerelle d'hybridation, de l'ensemble desdits réseaux d'accès, et
- sélection, par la passerelle d'hybridation, du ou des réseaux d'accès à utiliser pour la transmission de données.

Le procédé comprend en outre, lors de la transmission de données vers ledit terminal mobile, au moins des étapes de :
- mise en œuvre, par la passerelle d'hybridation, de l'ensemble des fonctions de la couche réseau sur lesdites données à transmettre, pour obtenir des données de couche 3,
- mise en œuvre, par la passerelle d'hybridation, de l'ensemble fonctions de la couche liaison de données sur les données de couche 3, pour obtenir des paquets de données de couche 2,
- transmission des paquets de données de couche 2 vers le ou lesdits réseaux d'accès à utiliser, et
- mise en œuvre, par chacune des passerelles d'accès du ou des dits réseaux d'accès à utiliser, des fonctions de la couche physique, pour obtenir des paquets de données de couche 1 émises depuis lesdites passerelles d'accès.

Enfin, le procédé comprend, lors de la transmission de données depuis ledit terminal mobile, au moins des étapes de :
- réception de paquets de données de couche 1, par chacune des passerelles d'accès du ou des dits réseaux d'accès à utiliser, et mise en œuvre des fonctions de la couche physique, pour obtenir des paquets de données de couche 2,
- transmission des paquets de données de couche 2 vers ladite passerelle d'hybridation,
- mise en œuvre, par la passerelle d'hybridation, des fonctions de la couche liaison de données sur les paquets de données de couche 2, pour obtenir des données de couche 3, et
- mise en œuvre, par la passerelle d'hybridation, des fonctions de la couche réseau sur lesdites données à transmettre.

Les fonctions de la couche liaison de données et les fonctions de la couche réseau, mises en œuvre par la passerelle d'hybridation lors de la transmission de données vers ou depuis le terminal mobile, sont adaptées selon le ou les réseaux d'accès sélectionnés lors de l'étape de sélection du ou des réseaux d'accès à utiliser.

Selon une variante, au moins l'un des réseaux d'accès est un réseau satellitaire.

Selon une autre variante, au moins l'un des réseaux d'accès est un réseau terrestre.

Selon une autre variante, le terminal mobile est un drone.

Selon une autre variante, au moins deux desdits réseaux d'accès utilisent des standards de communication différents.

L'invention sera mieux comprise et d'autres caractéristiques et avantages apparaîtront mieux à la lecture de la description qui suit, donnée à titre non limitatif, et grâce aux figures annexées parmi lesquelles :
- La figure 1 illustre un réseau de télécommunications comportant plusieurs liens radio selon l'état de l'art,
- La figure 2 illustre un premier mode de réalisation d'un réseau de télécommunications comportant plusieurs liens radios selon l'invention,
- La figure 3 illustre un second mode de réalisation d'un réseau de télécommunications comportant plusieurs liens radio selon l'invention,
- La figure 4 illustre un exemple de mise en œuvre du procédé selon l'invention.

Les communications d'un réseau de télécommunications sont généralement organisées selon le modèle OSI (acronyme anglais pour Open Systems Interaction).

Ce modèle décrit les communications sous la forme d'une architecture en couches, chacune des couches réalisant des services qui lui sont propres. Les quatre couches dites « hautes » sont des couches applicatives orientées vers des programmes spécifiques. Elles traitent en particulier de codage des données, de synchronisation des échanges, et de communications de bout en bout entre processus.

Les trois couches dites « basses » sont des couches dédiées au transport des données. Ce sont les suivantes :
- Couche 3 - Réseau : cette couche est en charge de la détermination du parcours des données et de l'adressage logique,
- Couche 2 - Liaison : également appelée couche MAC, cette couche est en charge de l'adressage physique et de la segmentation des données,
- Couche 1 - Physique : cette couche est en charge de la transmission des données.

La couche 4 - Transport, fait le lien entre les couches hautes et les couches basses.

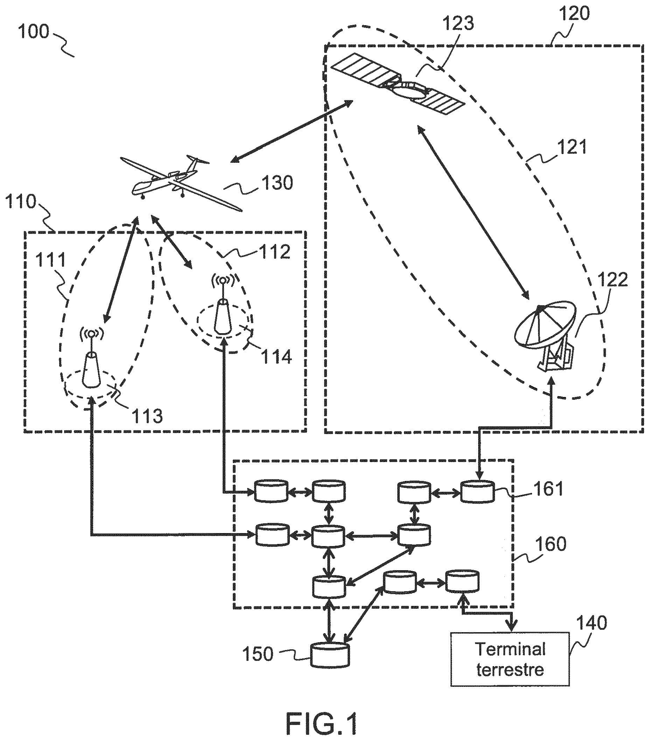

La figure 1 illustre un réseau de télécommunications présentant plusieurs réseaux d'accès selon l'état de l'art, tel que défini dans le programme Européen SESAR.

Un tel réseau de télécommunications 100 peut par exemple présenter un système de communication terrestre 110 et un système de communication satellite 120. Dans la figure 1, le système de communication terrestre comporte deux réseaux d'accès 111 et 112 à destination d'un terminal embarqué 130, chacun des réseaux d'accès comprenant au moins une passerelle d'accès terrestre 113 et 114, généralement nommées stations de base. Le système de communication satellitaire ne présente, dans l'exemple, qu'un seul réseau d'accès satellitaire 121 comportant une passerelle d'accès satellitaire 122 et un satellite 123, mais pourrait en présenter plusieurs. Chacun des réseaux d'accès permet d'acheminer des messages entre un terminal terrestre 140 et un terminal mobile 130 embarqué dans un aéronef, l'aéronef pouvant être un drone.

Le réseau de télécommunications comporte une passerelle dite passerelle multi-liens 150 chargée de superviser chacun des systèmes de communication 110 et 120, afin de sélectionner le système de communication le plus à même d'assurer la bonne transmission des données.

L'ensemble des passerelles communiquent via un réseau d'interconnexion 160. Dans le cas du programme SESAR, ce réseau d'interconnexion est nommé EATMN (acronyme anglais pour European Air Traffic Management Network, ou réseau européen de gestion du trafic aérien). Il interconnecte tous les centres ATCC (acronyme anglais pour Air Traffic Control Center, ou centres de contrôle aérien) situés dans les aéroports, où se trouvent les contrôleurs aériens aux systèmes de communication bord sol. Il est composé de plusieurs routeurs 161 interconnectés et éventuellement de plusieurs sous réseaux interconnectés.

Le réseau d'interconnexion est donc un point d'entrée pour les données en provenance du terminal utilisateur, et inversement.

La passerelle multi-liens 150 est reliée aux différents systèmes de communication via le réseau d'interconnexion. En cas de perte d'un réseau d'accès, les tables de routage du réseau d'interconnexion sont mises à jour pour prendre en compte la perte du lien vers le réseau d'accès primaire et identifier un meilleur chemin entre la passerelle multi-liens et le terminal mobile via le réseau d'accès secondaire.

Chacun des systèmes de communication fonctionne de manière indépendante. En particulier, ils peuvent utiliser des fréquences, ou bandes de fréquences, différentes ainsi que des standards de communication, ou formes d'onde, différents.

Au sein d'un même système de communication, l'ensemble des passerelles d'accès prennent en charge, par le biais d'échanges de signalisation interne au système, les fonctions d'assignation/libération de ressources, de gestion de la mobilité entre les différentes passerelles, de choix des débits, ainsi que l'ensemble des fonctions relatives à l'entrée/sortie de terminaux dans le système, leur mobilité, et l'évolution de la qualité de liaison.

Les passerelles des différents réseaux d'accès sont en charge de réaliser les traitements relatifs à l'ensemble des couches basses du modèle OSI.

Une telle mise en œuvre présente les inconvénients suivants lors de la commutation d'un premier système de communication vers un deuxième :
- les données en cours de transmission, les données non acquittées, et les données placées en attente d'émission, en particulier dans les traitements de la couche liaison de donnée, sont perdues. Ces paquets devront donc être réexpédiés, ce qui engendre une latence supplémentaire, et une utilisation non optimale des ressources,
- le basculement d'un réseau d'accès à l'autre nécessite la mise à jour de l'ensemble des tables de routage du réseau d'interconnexion et des réseaux étendus. Une telle mise à jour, sur des sites éloignés, nécessite un temps de mise en œuvre qui entraine une période d'indisponibilité de la liaison,
- avant de pouvoir transmettre sur le deuxième système de communication, un nouveau lien doit être établi, ce qui introduit une latence supplémentaire.

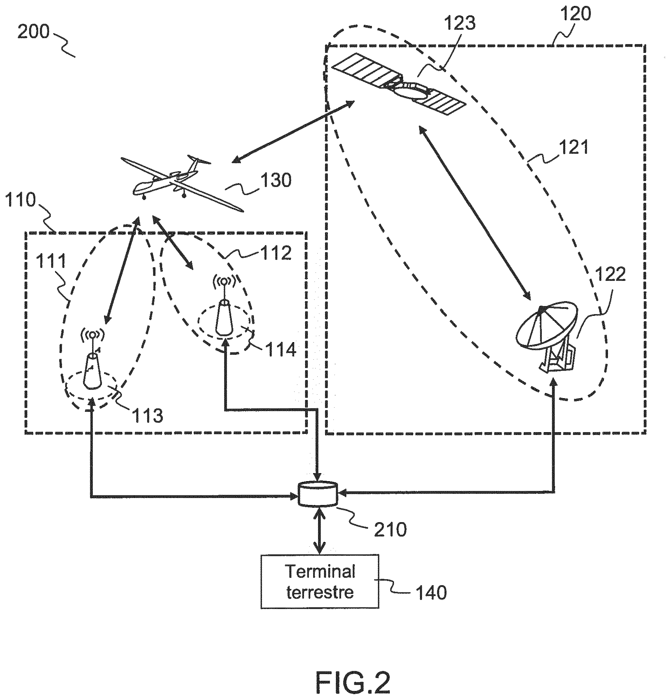

La figure 2 illustre un premier mode de réalisation d'un réseau de télécommunications 200 comportant plusieurs réseaux d'accès depuis et à destination d'un terminal mobile 130 selon l'invention.

Dans ce mode de réalisation, les différentes passerelles d'accès 113, 114 et 122, sont directement reliées à une passerelle dite passerelle d'hybridation 210.

Contrairement à l'état de l'art, la passerelle d'hybridation est directement connectée aux différents réseaux d'accès et au terminal mobile 130. Elle est un point d'accès unique à chacun des réseaux d'accès, et met en œuvre en temps réel les fonctions traditionnellement spécifiques à chacun de ces réseaux d'accès.

La passerelle d'hybridation est reliée à chacune des passerelles d'accès 113, 114 et 121, par le biais de connections point à point, ou de réseaux IP. Chacun de ces liens se fait en utilisant des ports distincts. De cette manière, la commutation d'un réseau à un autre est faite instantanément à partir de la station d'hybridation, en commutant le port utilisé pour transmettre les données. Contrairement à l'état de l'art, le basculement ne dépend pas de la convergence de la mise à jour des tables de routage dans le réseau IP. Le basculement est instantané et n'introduit donc pas de latence.

La passerelle d'hybridation 210 réalise l'hybridation des différents systèmes au niveau de la couche réseau et de la couche liaison de données. Elle est en charge du contrôle et de la gestion de l'ensemble des réseaux d'accès, de la sélection du ou des réseaux à utiliser pour la transmission, de la mise en œuvre des fonctions de la couche réseau, et de la mise en œuvre des fonctions de la couche liaison de donnée.

Le contrôle des réseaux comprend l'attribution, la libération, et la réallocation de ressources sur chacun des systèmes de communication, la surveillance et l'analyse des variations de la qualité de chacun des réseaux d'accès, le contrôle de la signalisation, incluant le contrôle des schémas de modulation et codage utilisés, le contrôle de la mobilité, et le contrôle de la redondance.

Le contrôle de la mobilité étant réalisé au niveau de la passerelle d'hybridation, il permet de contrôler la mobilité à l'intérieur d'un système de communication (comme par exemple le contrôle de la mobilité intra cellules dans un système de communication terrestre ou intra spot satellitaire dans un système de communication satellitaire) mais également entre les différents systèmes de communication (comme par exemple entre le système de communication terrestre 110 et le système de communication satellite 120).

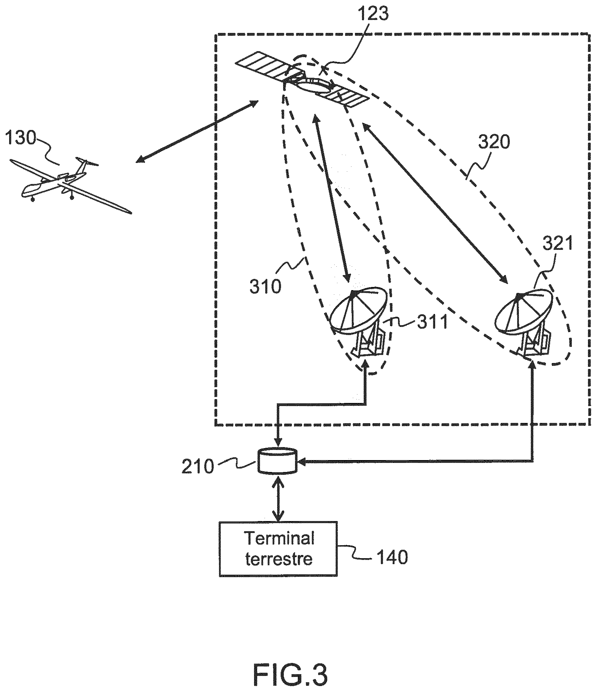

La passerelle d'hybridation est également en charge du contrôle de la redondance. Lorsque le réseau de télécommunications dispose de deux réseaux utilisant des ressources distinctes (comme un réseau terrestre 111 et un réseau satellite 121), les paquets peuvent être dupliqués entre les deux chemins, de manière à augmenter leur probabilité de bonne réception, ou transmis en utilisant les deux chemins, de manière à réduire leur latence. Le contrôle de la redondance s'applique également au contrôle d'équipements redondants, décrit par la figure 3.

La sélection du ou des réseaux à utiliser peut se faire en fonction d'informations sur la qualité des réseaux d'accès, par le biais de remontée d'informations de QoS (acronyme anglais pour Quality of Service, ou qualité de service), ou sur la base d'autres critères comme la position géographique du terminal mobile, la disponibilité des réseaux, ou la défaillance d'équipements.

La passerelle d'hybridation réalise également les fonctions de couche réseau et couche liaison de donnée.

Les systèmes de communication 110 et 120 peuvent utiliser des fréquences, bandes de fréquences, et standards de communication différents, comme par exemple la norme DVB-T (acronyme anglais pour Digital Video Broadcasting - Terrestrial) pour le système terrestre et la norme DVB-S (acronyme anglais pour DVB - Satellite) pour le système satellite.

Les fonctions de la couche réseau consistent notamment à faire l'adaptation entre le réseau IP et la couche liaison de données spécifique du système (traduction de l'adresse IP en adresse MAC et traduction des classes de services), et sont adaptées aux standards de communication utilisés.

Les fonctions de la couche liaison de données sont également adaptées au standard de communication utilisé. Elles comprennent le découpage et l'encapsulation des données en paquets adaptés à la couche physique, et à l'ajout de signalisation permettant de reconstituer les données à la réception. Elles comprennent également les fonctions de contrôle des erreurs, selon par exemple les méthodes ARQ (acronyme anglais pour Automatic Repeat reQuest, ou requête automatique de répétition) ou H-ARQ (terme anglais pour Hybrid ARQ), qui permettent d'acquitter la bonne réception des paquets de données.

La réalisation des mécanismes d'acquittement par la passerelle d'hybridation permet, en cas de basculement d'un réseau à un autre, d'acquitter sur le nouveau réseau les paquets (en anglais LPDU pour Link layer Packet Data Unit) en cours d'acquittement sur le réseau précédemment utilisé. De cette manière, il n'y a pas de pertes de données, et donc pas de réémissions nécessaires.

Enfin, la passerelle d'hybridation réalise les fonctions de planification des transmissions de données. Ces fonctions correspondent à la gestion des instants d'émission, et la synchronisation des trames.

Les passerelles d'accès dédiées à chacun des réseaux d'accès réalisent les fonctions de la couche physique, incluant le codage, la modulation, et la transmission des paquets acheminés par la passerelle d'hybridation.

Lorsque les temps de transit entre la passerelle d'hybridation et les passerelles d'accès ne sont pas déterministes, ou sont inconnus, les passerelles peuvent également mettre en œuvre les fonctions de planification des instants d'émissions, relatives à la couche liaison de données.

Les avantages de l'invention sont les suivants :
- le basculement d'un premier réseau d'accès à un second réseau d'accès peut être réalisé instantanément, quel que soit l'état de la communication. L'invention ne nécessite pas de temps de mise à jour des tables de routage permettant de relier le terminal utilisateur au terminal mobile, ni de temps de mise en œuvre de la communication sur le nouveau réseau d'accès,
- l'invention permet de suivre la mobilité du terminal mobile à l'intérieur de chacun des systèmes de télécommunications, mais également entre les réseaux de télécommunications,
- l'invention permet de basculer d'un réseau d'accès à un autre réseau d'accès en conservant le contexte des couches 2 et 3. Lors du basculement d'un réseau d'accès à un autre, les liens de couche 2 ne sont pas rompus et ne nécessitent pas de rétablissement, les paquets en file d'attente ou en cours d'acquittement ne sont pas perdus.

L'invention permet donc d'améliorer la disponibilité et la fiabilité d'un système de communication, car elle permet de pouvoir basculer d'un réseau à un autre de manière totalement transparente pour l'utilisateur final, sans modifications des latences du réseau, ou perte de paquets.

La figure 3 illustre un second mode de réalisation d'un réseau de télécommunications comportant plusieurs réseaux d'accès selon l'invention.

Dans ce cas, le réseau de télécommunication 300 dispose de deux réseaux d'accès satellite redondants 310 et 320, incluant chacun une passerelle d'accès satellite 311 et 321.

En cas de défaillance de la passerelle satellite utilisée, la passerelle d'hybridation 210 peut commuter instantanément vers la seconde passerelle sans perte de contexte, ni de données. Les ressources physiques utilisées (comme par exemple la fréquence) étant identiques, le basculement est réalisé de manière transparente pour le terminal mobile. Ce mode de fonctionnement est particulièrement utile pour les liaisons satellite, pour lesquelles la disponibilité des satellites 123 est faible, et donc particulièrement affectées par les pertes de paquets et retransmissions.

Le deuxième mode de réalisation, illustré par la figure 2, et le troisième mode de réalisation, illustré par la figure 3, peuvent être mis en œuvre simultanément dans un même réseau de télécommunications.

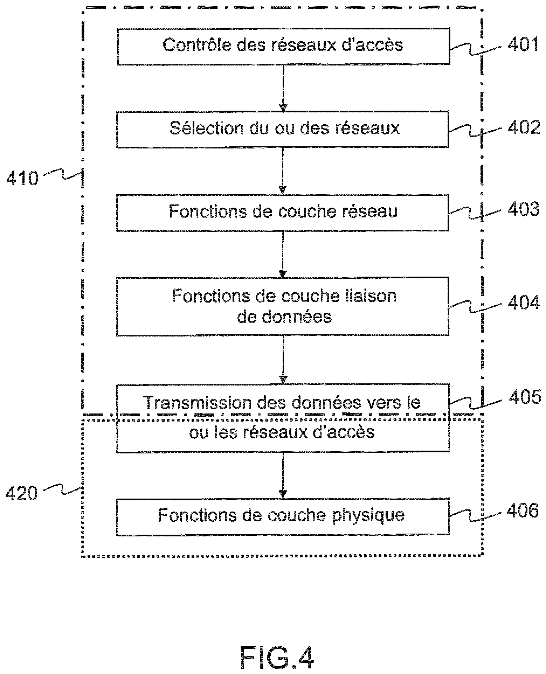

La figure 4 illustre un exemple de mise en œuvre du procédé selon l'invention de transmission de données depuis un terminal utilisateur 140 vers un terminal mobile 130 dans un réseau de télécommunications hybride comprenant plusieurs réseaux d'accès distincts vers un terminal mobile.

Ce procédé est destiné à être mis en œuvre sur des dispositifs de calcul temps réel inclus dans une passerelle d'hybridation 210 ainsi que dans chacune des passerelles d'accès 113, 114 et 122. Ces dispositifs peuvent être divers éléments matériels et/ou logiciels, comme par exemple des programmes d'ordinateurs ou des circuits électronique dédiés.

Le procédé peut être exécuté par une machine de calcul reprogrammable (un processeur ou un micro contrôleur par exemple) exécutant un programme comprenant une séquence d'instructions, ou par une machine de calcul dédiée (par exemple un ensemble de portes logiques comme un FPGA ou un ASIC, ou tout autre module matériel).

Le procédé consiste en la réalisation d'une première étape 401 de contrôle de l'ensemble des réseaux d'accès par la passerelle d'hybridation. Comme décrit précédemment, ce contrôle comprend au moins la gestion des ressources radio de chacun des systèmes de communication, la supervision de la signalisation, et en particulier de la qualité et disponibilité des différents liens, la gestion de la mobilité, et la gestion de la redondance.

Une seconde étape 402 de sélection du ou des réseaux d'accès à utiliser est réalisée par la passerelle d'hybridation. Cette étape s'appuie sur la supervision de la signalisation réalisée lors de l'étape 401.

Une troisième étape 403 d'application des fonctions de la couche réseau aux données reçues depuis un terminal utilisateur est réalisée par la passerelle d'hybridation. Cette étape est adaptée selon les standards de communication utilisés par le ou les réseaux d'accès sélectionnés lors de l'étape 402, et permet de convertir les données en données de couche 3.

Une quatrième étape 404 d'application des fonctions de la couche liaison de données est exécutée par la passerelle d'hybridation. Cette étape est adaptée en fonction des standards de communication utilisés par le ou les réseaux d'accès sélectionnés lors de l'étape 402, et permet de convertir les données de couche 3 en paquets de données de couche 2.

Une cinquième étape 405 de transmission des paquets de données de couche 2 depuis la passerelle d'hybridation vers la ou les passerelles d'accès sélectionnées lors de l'étape 402 est réalisée. Cette étape consiste à émettre les données par la passerelle d'hybridation et à les recevoir par la ou les passerelles d'accès. Si le lien entre la passerelle d'hybridation et la ou les passerelles d'accès est un lien IP, cette étape comprend l'encapsulation des paquets de données de couche 2 dans des messages IP par la passerelle d'hybridation, et la dé-encapsulation des messages IP par la ou les passerelles d'accès.

Enfin, une sixième étape 406 d'application des fonctions de la couche physique est réalisée par la ou les passerelles d'accès sélectionnées lors de l'étape 402 sur les paquets de données de couche 2. Cette étape comprend l'application des différents algorithmes de couche physique, tels que le code correcteur d'erreur, l'entrelacement et la modulation, et l'émission sur le lien radio des paquets de données de couche 1.

La passerelle d'hybridation est donc en charge de l'exécution des étapes 410 comprenant les étapes 401, 402, 403, 404 et l'émission des données de l'étape 405.

Les passerelles d'accès sont donc en charge de l'exécution des étapes 420 comprenant la réception des données de l'étape 405, et l'étape 406.

La mise en œuvre du procédé selon l'invention de transmission de données depuis un terminal mobile 130 vers un terminal utilisateur 140 reprend les étapes 401 et 402 réalisées par la passerelle d'hybridation, et exécute successivement les opérations miroir des étapes 406, 405, 404 et 403.

## Revendications

1. Passerelle (210), dite passerelle d'hybridation, destinée à la transmission bidirectionnelle de données avec un terminal mobile (130) dans un réseau de télécommunications (200) comprenant au moins deux réseaux d'accès distincts (111, 112, 121) vers ledit terminal mobile, ladite passerelle d'hybridation étant configurée pour constituer un point d'accès à chacun desdits réseaux d'accès, et pour réaliser au moins :
• des fonctions de contrôle de l'ensemble desdits réseaux d'accès,
• des fonctions de sélection du ou des réseaux d'accès à utiliser pour la transmission de données vers ledit terminal mobile,
ladite passerelle d'hybridation étant **caractérisée en ce qu'**elle est en outre configurée pour réaliser :
• l'ensemble des fonctions de la couche réseau de ladite transmission de données, adaptées selon le ou les réseaux d'accès sélectionnés, et
• l'ensemble des fonctions de la couche liaison de données de ladite transmission de données, adaptées selon le ou les réseaux d'accès sélectionnés.

2. Passerelle d'hybridation selon la revendication 1, dans laquelle :
• les fonctions de la couche réseau réalisées permettent de convertir les données à transmettre en données de couche 3 adaptées selon le ou les réseaux d'accès sélectionnées,
• les fonctions de la couche liaison de données réalisées permettent de convertir les données de couche 3 en paquets de données de couche 2 adaptées selon le ou les réseaux d'accès sélectionnées.

3. Passerelle d'hybridation selon l'une des revendications précédentes, dans laquelle lesdites fonctions de contrôle de l'ensemble des réseaux d'accès comprennent :
• l'attribution de ressources radio sur chacun desdits réseaux d'accès,
• le contrôle des liens radio de chacun desdits réseaux d'accès,
• le contrôle de la signalisation de chacun desdits réseaux d'accès,
• le contrôle de la mobilité dudit terminal mobile à l'intérieur du réseau de télécommunications (200), et
• le contrôle de la redondance des réseaux d'accès à utiliser pour la transmission de données.

4. Passerelle d'hybridation selon l'une des revendications précédentes, dans laquelle lesdites fonctions de la couche liaison de données comprennent :
• des fonctions d'encapsulation desdites données,
• des fonctions de contrôle des erreurs de transmission sur chacun desdits réseaux d'accès, et
• des fonctions de planification desdites transmissions de données.

5. Passerelle d'hybridation l'une des revendications précédentes, dans laquelle les fonctions de la couche liaison de données mises en œuvre par la passerelle d'hybridation comprennent le contrôle des erreurs de transmission sur chacun desdits réseaux d'accès, la passerelle d'hybridation étant configurée pour, en cas de basculement entre deux réseaux d'accès, acquitter sur le nouveau réseau les données en cours d'acquittement sur le réseau précédemment utilisé.

6. Système de transmission bidirectionnelle de données avec un terminal mobile (130) dans un réseau de télécommunications (200) comprenant au moins deux réseaux d'accès (111, 112, 121) distincts vers ledit terminal mobile, **caractérisé en ce qu'**il comporte au moins une passerelle d'hybridation (210) selon l'une des revendications précédentes, et **en ce que** chacun des réseaux d'accès comprend au moins une passerelle d'accès (113, 114, 122) configurée pour réaliser au moins des fonctions de la couche physique de ladite transmission de données.

7. Système de transmission de données selon la revendication 6, dans lequel lesdites passerelles d'accès (113, 114, 122) sont configurées pour réaliser en outre des fonctions de planification des transmissions de données.

8. Système de transmission de données selon l'une des revendications 6 à 7, dans lequel au moins l'un des réseaux d'accès (121) est un réseau satellitaire.

9. Système de transmission de données selon l'une des revendications 6 à 8, dans lequel au moins l'un des réseaux d'accès (111, 112) est un réseau terrestre.

10. Système de transmission de données selon l'une des revendications 6 à 9, dans lequel ledit terminal mobile (130) est embarqué dans un drone.

11. Système de transmission de données selon l'une des revendications 7 à 10, dans lequel au moins deux desdits réseaux d'accès (113, 114, 122) utilisent des standards de communication différents.

12. Système de transmission de données selon l'une des revendications 6 à 11, dans lequel lesdites passerelles d'accès (113, 114, 122) sont configurées pour fournir à ladite passerelle d'hybridation (210) des informations concernant la qualité des réseaux d'accès auxquels elles appartiennent.

13. Procédé de transmission de données bidirectionnelle avec un terminal mobile dans un réseau de télécommunications comprenant au moins deux réseaux d'accès distincts vers ledit terminal mobile et une passerelle d'hybridation constituant un point d'accès à chacun desdits réseaux d'accès, lesdits réseaux d'accès comprenant chacun au moins une passerelle d'accès, ledit procédé de transmission de données comprenant au moins des étapes de :
• contrôle (401), par la passerelle d'hybridation, de l'ensemble desdits réseaux d'accès, et
• sélection (402), par la passerelle d'hybridation, du ou des réseaux d'accès à utiliser pour la transmission de données,
ledit procédé de transmission des données étant **caractérisé en ce qu'**il comprend en outre, lors de la transmission de données vers ledit terminal mobile, au moins des étapes de :
• mise en œuvre (403), par la passerelle d'hybridation, de l'ensemble des fonctions de la couche réseau, adaptées selon le ou les réseaux d'accès sélectionnés, sur lesdites données à transmettre, pour obtenir des données de couche 3,
• mise en œuvre (404), par la passerelle d'hybridation, de l'ensemble des fonctions de la couche liaison de données, adaptées selon le ou les réseaux d'accès sélectionnés, sur les données de couche 3, pour obtenir des paquets de données de couche 2,
• transmission (405) des paquets de données de couche 2 vers le ou lesdits réseaux d'accès sélectionnés, et
• mise en œuvre (406), par chacune des passerelles d'accès du ou des dits réseaux d'accès sélectionnés, des fonctions de la couche physique, pour obtenir des paquets de données de couche 1 émises depuis lesdites passerelles d'accès,
et **en ce qu'**il comprend lors de la transmission de données depuis ledit terminal mobile, au moins des étapes de :
• réception de paquets de données de couche 1, par chacune des passerelles d'accès du ou des dits réseaux d'accès sélectionnés, et mise en œuvre des fonctions de la couche physique, pour obtenir des paquets de données de couche 2,
• transmission des paquets de données de couche 2 vers ladite passerelle d'hybridation,
• mise en œuvre, par la passerelle d'hybridation, des fonctions de la couche liaison de données, adaptées selon le ou les réseaux d'accès sélectionnés, sur les paquets de données de couche 2, pour obtenir des données de couche 3, et
• mise en œuvre, par la passerelle d'hybridation, des fonctions de la couche réseau, adaptées selon le ou les réseaux d'accès sélectionnés, sur lesdites données à transmettre.

14. Procédé de transmission de données selon la revendication 13, dans lequel au moins l'un des réseaux d'accès (121) est un réseau satellitaire.

15. Procédé de transmission de données selon l'une des revendications 13 et 14, dans lequel au moins l'un des réseaux d'accès (111, 112) est un réseau terrestre.

16. Procédé de transmission de données selon l'une des revendications 13 à 15, dans lequel ledit terminal mobile (130) est embarqué dans un drone.

17. Procédé de transmission de données selon l'une des revendications 13 à 16, dans lequel au moins deux desdits réseaux d'accès (113, 114, 122) utilisent des standards de communication différents.

## Patentansprüche

1. Gateway (210), genannt Hybridisierungs-Gateway, bestimmt zur bidirektionalen Übertragung von Daten mit einem mobilen Endgerät (130) in einem Telekommunikationsnetz (200), beinhaltend mindestens zwei unterschiedliche Zugangsnetze (111, 112, 121) zum mobilen Endgerät, wobei das Hybridisierungs-Gateway konfiguriert ist, um einen Zugangspunkt zu jedem der Zugangsnetze zu bilden, und um mindestens Folgendes auszuführen:
• Kontrollfunktionen für sämtliche Zugangsnetze,
• Auswahlfunktionen des oder der für die Datenübertragung an das mobile Endgerät zu verwendenden Zugangsnetze(s),
wobei das Hybridisierungs-Gateway **dadurch gekennzeichnet ist, dass** es zudem konfiguriert ist, um Folgendes auszuführen:
• sämtliche Netzwerkschichtfunktionen der Datenübertragung, angepasst an das oder die ausgewählte(n) Zugangsnetz(e), und
• sämtliche Datenverbindungsschichtfunktionen der Datenübertragung, angepasst an das oder die ausgewählte(n) Zugangsnetz(e).

2. Hybridisierungs-Gateway nach Anspruch 1, bei welchem:
• die ausgeführten Netzwerkfunktionen es ermöglichen, die zu übertragenen Daten in Daten der Schicht 3 zu konvertieren, angepasst an das oder die ausgewählte(n) Zugangsnetz(e),
• die ausgeführten Datenverbindungsschichtfunktionen es ermöglichen, die Daten der Schicht 3 in Datenpakete der Schicht 2 zu konvertieren, angepasst an das oder die ausgewählte(n) Zugangsnetz(e).

3. Hybridisierungs-Gateway nach einem der vorhergehenden Ansprüche, bei welchem die Kontrollfunktionen sämtlicher Zugangsnetze Folgendes beinhalten:
• Zuweisung von Funkressourcen an jedes der Zugangsnetze,
• Kontrolle der Funkverbindungen eines jeden der Zugangsnetze,
• Kontrolle der Signalisierung eines jeden der Zugangsnetze,
• Kontrolle der Mobilität des mobilen Endgerätes innerhalb des Telekommunikationsnetzwerkes (200), und
• Kontrolle der Redundanz der zur Datenübertragung zu verwendenden Zugangsnetze.

4. Hybridisierungs-Gateway nach einem der vorhergehenden Ansprüche, bei welchem die Datenverbindungsschichtfunktionen Folgendes beinhalten:
• Verkapselungsfunktionen der Daten,
• Kontrollfunktionen der Übertragungsfehler an jedes der Zugangsnetze und
• Planungsfunktionen der Datenübertragungen.

5. Hybridisierungs-Gateway nach einem der vorhergehenden Ansprüche, bei welchem die Datenverbindungsschichtfunktionen, welche durch das Hybridisierungs-Gateway umgesetzt werden, die Kontrolle der Übertragungsfehler an jedem der Zugangsnetze beinhalten, wobei das Hybridisierungs-Gateway konfiguriert ist, um beim Umschalten zwischen zwei Zugangsnetzen am neuen Netz die im vorherigen Netz in Quittierung begriffenen Daten zu quittieren.

6. Bidirektionales Datenübertragungssystem mit einem mobilen Endgerät (130) in einem Telekommunikationsnetz (200), beinhaltend mindestens zwei unterschiedliche Zugangsnetze (111, 112, 121) zu dem mobilen Endgerät, **dadurch gekennzeichnet, dass** es mindestens ein Hybridisierungs-Gateway (210) nach einem der vorhergehenden Ansprüche beinhaltet, und dadurch, dass jedes der Zugangsnetze mindestens ein Zugangs-Gateway (113, 114, 122) beinhaltet, welches konfiguriert ist, um mindestens Funktionen der physischen Schicht der Datenübertragung auszuführen.

7. Datenübertragungssystem nach Anspruch 6, bei welchem die Zugangs-Gateways (113, 114, 122) konfiguriert sind, zudem Planungsfunktionen der Datenübertragungen auszuführen.

8. Datenübertragungssystem nach einem der Ansprüche 6 bis 7, bei welchem mindestens eines der Zugangsnetze (121) ein Satellitennetz ist.

9. Datenübertragungssystem nach einem der Ansprüche 6 bis 8, bei welchem mindestens eines der Zugangsnetze (111, 112) ein terrestrisches Netz ist.

10. Datenübertragungssystem nach einem der Ansprüche 6 bis 9, bei welchem das mobile Endgerät (130) an Bord einer Drohne mitgeführt wird.

11. Datenübertragungssystem nach einem der Ansprüche 7 bis 10, bei welchem mindestens zwei der Zugangsnetze (113, 114, 122) unterschiedliche Kommunikationsstandards verwenden.

12. Datenübertragungssystem nach einem der Ansprüche 6 bis 11, bei welchem die Zugangs-Gateways (113, 114, 122) konfiguriert sind, um dem Hybridisierungs-Gateway (210) Informationen zur Qualität der Zugangsnetze bereitzustellen, zu welchen sie gehören.

13. Bidirektionales Datenübertragungsverfahren mit einem mobilen Endgerät in einem Telekommunikationsnetz, beinhaltend mindestens zwei unterschiedliche Zugangsnetze zum mobilen Endgerät und ein Hybridisierungs-Gateway, das einen Zugangspunkt zu jedem der Zugangsnetze bildet, wobei die Zugangsnetze jeweils mindestens ein Zugangs-Gateway beinhalten, wobei das Datenübertragungsverfahren mindestens folgende Schritte beinhaltet:
• Kontrolle (401), durch das Hybridisierungs-Gateway, sämtlicher Zugangsnetze, und
• Auswahl (402), durch das Hybridisierungs-Gateway, des oder der für die Datenübertragung zu verwendenden Zugangsnetze(s),
wobei das Datenübertragungsverfahren **dadurch gekennzeichnet ist, dass** es zudem, bei der Datenübertragung an das mobile Endgerät, mindestens folgende Schritte beinhaltet:
• Umsetzung (403), durch das Hybridisierungs-Gateway, sämtlicher Funktionen der Netzwerkschicht, angepasst an das oder die ausgewählte(n) Zugangsnetz(e), an den zu übertragenden Daten, zum Erzielen der Daten der Schicht 3,
• Umsetzung (404), durch das Hybridisierungs-Gateway, sämtlicher Datenverbindungsschichtfunktionen, angepasst an das oder die ausgewählte(n) Zugangsnetz(e), an den Daten der Schicht 3, zum Erzielen der Datenpakete der Schicht 2,
• Übertragung (405) der Datenpakete der Schicht 2 an das oder die ausgewählte(n) Zugangsnetz(e), und
• Umsetzung (406), durch jedes der Zugangs-Gateways des oder der ausgewählten Zugangsnetze(s), der Funktionen der physischen Schicht, zum Erzielen der Datenpakete der Schicht 1, welche von den Zugangs-Gateways ausgesendet werden,
und dadurch, dass es bei der Datenübertragung von dem mobilen Endgerät mindestens folgende Schritte beinhaltet:
• Empfang von Datenpaketen der Schicht 1, durch jedes der Zugangs-Gateways des oder der ausgewählten Zugangsnetze(s), und Umsetzung der Funktionen der physischen Schicht, zum Erzielen der Datenpakete der Schicht 2,
• Übertragung der Datenpakete der Schicht 2 an das Hybridisierungs-Gateway,
• Umsetzung, durch das Hybridisierungs-Gateway, der Datenverbindungsschichtfunktionen, angepasst an das oder die ausgewählte(n) Zugangsnetz(e), an den Datenpaketen der Schicht 2, zum Erzielen der Daten der Schicht 3, und
• Umsetzung, durch das Hybridisierungs-Gateway, der Funktionen der Netzwerkschicht, angepasst an das oder die ausgewählte(n) Zugangsnetz(e), an den zu übertragenden Daten.

14. Datenübertragungsverfahren nach Anspruch 13, bei welchem mindestens eines der Zugangsnetze (121) ein Satellitennetz ist.

15. Datenübertragungsverfahren nach einem der Ansprüche 13 und 14, bei welchem mindestens eines der Zugangsnetze (111, 112) ein terrestrisches Netz ist.

16. Datenübertragungsverfahren nach einem der Ansprüche 13 bis 15, bei welchem das mobile Endgerät (130) an Bord einer Drohne mitgeführt wird.

17. Datenübertragungsverfahren nach einem der Ansprüche 13 bis 16, bei welchem mindestens zwei der Zugangsnetze (113, 114, 122) unterschiedliche Kommunikationsstandards verwenden.

## Claims

1. Gateway (210), called hybridization gateway, intended for the bidirectional data transmission with a mobile terminal (130) in a telecommunications network (200) comprising at least two distinct access networks (111, 112, 121) to said mobile terminal, said hybridization gateway being configured to constitute an access point to each of said access networks, and to perform at least:
• control functions for all of said access networks,
• selection functions for the access network or networks to be used for the data transmission to said mobile terminal,
said hybridization gateway being **characterized in that** it is further configured to perform:
all of the network layer functions for said data transmission, adapted according to the access network or networks selected, and
• all of the data link layer functions for said data transmission, adapted according to the access network or networks selected.

2. The hybridization gateway of claim 1, wherein:
• the performed network layer functions make it possible to convert the data to be transmitted into layer 3 data adapted according to the selected access network or networks,
• the performed data link layer functions make it possible to convert the layer 3 data into layer 2 data packets adapted according to the selected access network or networks.

3. Hybridization gateway according to one of the preceding claims, wherein said control functions of all the access networks comprise:
• the assignment of radio resources to each of said access networks,
• control of the radio links of each of said access networks,
• control of the signaling of each of said access networks,
• control of the mobility of said mobile terminal within the telecommunication network (200), and
• control of the redundancy of the access networks to be used for the data transmission.

4. Hybridization gateway according to one of the preceding claims, wherein said data link layer functions include:
• functions of encapsulation of said data,
• transmission error control functions on each of said access networks, and
• scheduling functions for said data transmissions.

5. Hybridization gateway one of the preceding claims, in which functions of the data link layer implemented by the hybridization gateway include the control of transmission errors on each of said access networks, the hybridization gateway being configured to, in the case of a switchover between two access networks, acknowledge, on the new network, the data currently being acknowledged on the network previously used.

6. System for bidirectional data transmission with a mobile terminal (130) in a telecommunication network (200) comprising at least two distinct access networks (111, 112, 121) to said mobile terminal, **characterized in that** it comprises at least one hybridization gateway (210) according to one of the preceding claims, and **in that** each of the access networks comprises at least one access gateway (113, 114, 122) configured to perform at least physical layer functions for said data transmission.

7. Data transmission system according to claim 6, in which said access gateways (113, 114, 122) are configured to also perform scheduling functions for the data transmissions.

8. Data transmission system according to one of claims 6 to 7, in which at least one of the access networks (121) is a satellite network.

9. Data transmission system according to one of claims 6 to 8, in which at least one of the access networks (111, 112) is a terrestrial network.

10. Data transmission system according to one of claims 6 to 9, in which said mobile terminal (130) is embedded in a drone.

11. Data transmission system according to one of claims 7 to 10, in which at least two of said access networks (113, 114, 122) use different communication standards.

12. Data transmission system according to one of claims 6 to 11, in which said access gateways (113, 114, 122) are configured to provide said hybridization gateway (210) with information concerning the quality of the access networks to which they belong.

13. Method for bidirectional data transmission with a mobile terminal in a telecommunication network comprising at least two distinct access networks to said mobile terminal, and a hybridization gateway constituting an access point to each of said access networks, said access networks each comprising at least one access gateway, **characterized in that** it comprises at least the steps of:
• control (401), by the hybridization gateway, of all of said access networks, and
• selection (402), by the hybridization gateway, of the access network or networks to be used for the data transmission,
said data transmission method being **characterized in that** it further comprises, upon the transmission of data to said mobile terminal, at least the steps of:
• implementation (403), by the hybridization gateway, of all of said network layer functions, adapted according to the access network or networks selected, on said data to be transmitted, to obtain layer 3 data,
• implementation (404), by the hybridization gateway, of all of said data link layer functions, adapted according to the access network or networks selected, on the layer 3 data, to obtain layer 2 data packets,
• transmission (405) of the layer 2 data packets to said access network or networks selected, and
• implementation (406), by each of the access gateways of said access network or networks selected, of the physical layer functions, to obtain layer 1 data packets sent from said access gateways,
and **in that** it comprises, upon the transmission of data from said mobile terminal, at least the steps of:
• reception of layer 1 data packets, by each of the access gateways of said access network or networks selected, and implementation of the physical layer functions, to obtain layer 2 data packets,
• transmission of the layer 2 data packets to said hybridization gateway,
• implementation, by the hybridization gateway, of the data link layer functions, adapted according to the access network or networks selected, on the layer 2 data packets, to obtain layer 3 data, and
• implementation, by the hybridization gateway, of the network layer functions, adapted according to the access network or networks selected, on said data to be transmitted.

14. Data transmission method according to Claim 13, in which at least one of the access networks (121) is a satellite network.

15. Data transmission method according to one of Claims 13 and 14, in which at least one of the access networks (111, 112) is a terrestrial network.

16. Data transmission method according to one of Claims 13 to 15, in which said mobile terminal (130) is embedded in a drone.

17. Data transmission method according to one of Claims 13 to 16, in which at least two of said access networks (113, 114, 122) use different communication standards.
